(19) Europäisches Patentamt
European Patent Office
Office européen des brevets

(11) **EP 2 067 793 B2**

(12) **NEW EUROPEAN PATENT SPECIFICATION**
After opposition procedure

(45) Date of publication and mention
of the opposition decision:
**21.05.2014 Bulletin 2014/21**

(45) Mention of the grant of the patent:
**18.08.2010 Bulletin 2010/33**

(21) Application number: **07121627.9**

(22) Date of filing: **27.11.2007**

(51) Int Cl.:
*C08B 37/00* (2006.01)     *D21C 1/02* (2006.01)
*D21C 3/00* (2006.01)     *C08B 37/14* (2006.01)

(54) **Utilization of a wood hydrolysate**

Verwendung eines Holzhydrolysats

Utilisation d'un hydrolysat du bois

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**10.06.2009 Bulletin 2009/24**

(73) Proprietor: **Innventia AB**
**114 86 Stockholm (SE)**

(72) Inventors:
• **Dahlman, Olof**
**118 62, Stockholm (SE)**
• **Edlund, Ulrica**
**135 51, Tyresö (SE)**
• **Albertsson, Ann-Christine**
**133 36, Saltsjöbaden (SE)**
• **Söderqvist Lindblad, Margaretha**
**432 38, Varberg (SE)**
• **Parkås, Jim**
**432 33, Varberg (SE)**

(74) Representative: **Valea AB**
**Box 1098**
**405 23 Göteborg (SE)**

(56) References cited:
EP-A- 0 287 960          WO-A-02/40767
WO-A1-2004/083286     WO-A2-2001/068713
WO-A2-2008/103123     US-A- 4 681 935
US-A- 5 424 417          US-B1- 6 172 204

• 'Applied Biochemistry and Biotechology', vol. 136-140, 2007, HUMANA PRESS INC. deel ANDERSSON ET AL.: 'Comparison of Diafiltration and size_Exclusion Chromatography to Recover Hemicelluloses from Process Wateer from Thermomechanical Pulping of Spruce', pages 971 - 983
• WILEY-VCH VERLAG GMBH: 'Macromol. Rapid Commun.', vol. 21, 2000, WEINHEIM deel EBRINGEROVÀ ET AL.: 'Naturally occuring xylans structures, isolation procedures and properties', pages 542 - 556
• KLUWER ACADEMIC PUBLISHERS: 'Cellulose', vol. 7, 27 July 2000, NETHERLANDS deel GLASSER ET AL.: 'Isolation options for non-cellulosic heteropolysaccharides (HetPS)', pages 299 - 317
• BIOPOLYMER TECHNOLOGY, DEPARTMENT OF MATERIAL AND SURFACE CHEMISTRY, CHALMERS UNIVERSITY OF TECHNOLOGY: 'Carbonhydrate Polymers', vol. 61, 2005, ELSEVER, KRISTIANSTAD, SWEDEN deel HÖIJE ET AL.: 'Isolation and characterization of Physicochemical and material properties of arabinoxylans from barley husks', pages 266 - 275
• RAYMOND A. YOUNG AND MASOOD AKHTAR: 'Environmentally friendly Technologies for the Pulp and Paper Industry', 1998, JOHN WILEY & SONS, INC, ISBN 0-471-15770-8 deel KOKTA ET AL.: 'Stream Explosion Pulping', pages 191 - 214
• 'Wood Science and Technology', vol. 1, 1967, DDEPARTEMENT OF FOREST CHEMISTRY, STATE UNIVERSITY COLLEGE OF FORESTY AT SYRACUSE UNIVERSITY, SYRACUSE, N.Y. deel TIMELL: 'Recent Progress in the Chemistry of Wood Hemicelluloses', pages 45 - 70

EP 2 067 793 B2

- 'Wood Chemistry', vol. 2, ACADEMIC PRESS, ESPOO, FINLAND deel SJÖSTRÖM: 'Wood Pulping', pages 114 - 118
- 'Wood', 1989, WALTER DE GRUYTER deel FENGEL ET AL., pages 107 - 131
- 'Biomacromolecules', vol. 7, 10 February 2006, AMERICAN CHEMISTRY SOCIETY, STOCKHOLM, SWEDEN deel HARTMANN ET AL.: 'Surface- and Bulk-Modified Galactoglucomannan Hemicellulose Films and Film Laminates for Versatile Oxygen Barriers', pages 1989 - 1989
- 'Thesis for the Degree of Doctor of Philosophy', 2005, CHALMERS UNIVERSITY OF TECHNOLOGY, GÖTEBORG, SWEDEN deel M. GRÖNDAHL: 'Effects of Molecular Architecture of Xylans on Material Properties'
- PAUL GATENHOLM AND MAIJA TENKANEN: 'ACS Symposium Series', vol. 864, AMERICAN CHEMICAL SOCIETY, WASHINGTON, DC, ISBN 0-8412-3842-1 deel PULS ET AL.: 'Hemicelluloses: Science and Technology'
- PAUL GETENHOLM AND MAIJS TENKANEN: 'ACS Symposium Series', vol. 864, AMERICAN CHEMICAL SOCIETY, WASHINGTON, DC, ISBN 0-8112-3842-1 deel STALBRAND ET AL.: 'Isolation, Characterization, and Enzymatic Hydrolysis of Acetyl-Galactoglucomannan', pages 66 - 78
- PAUL GATENHOLM AND MAIJA TENKANEN: 'ACS Symposium Series', vol. 864, 2004, AMERICAN CHEMICAL SOCIETY, WASHINTON, DC deel KABEL ET AL.: 'Identification of Structural Features of Various (O-Acetylated) Xylo-Oligosaccharides from Xylan-Rich Agricultural By-Products:A Review', pages 108 - 121
- SCIENCE DIRECT: 'Carbohydrate Research', vol. 339, 2004, ELSEVIER deel HANNUKSELA ET AL.: 'NMR structural determination of dissolved O-acetylated galactoglucomannan isolate from spruce thermomechanical pulp', pages 301 - 312
- MARCEL DEKKER: 'Polysaccharides', vol. 2, SEVERIAN DUMITRIU, QUEBEC, CANADA deel LINDBLAD ET AL.: 'Chemical Modification of Hemicelluloses and Gums', pages 491 - 508
- 'Applied Biochemistry and Biotechnology', 2007, HUMANA PRESS, INC. deel J.R. MIELENZ: 'Introduction to the Proceedings of the Twenty-Eighth Symposium on Biotechnology for fuels and chemical', pages 137 - 140

Remarks:

The file contains technical information submitted after the application was filed and not included in this specification

**Description**

TECHNICAL FIELD

The present invention relates to a method for utilizing a hydrolysate from a wood material. The present invention further relates to a product derived from a hydrolysate obtained from the hydrothermal treatment of wood material.

BACKGROUND OF THE INVENTION

The object of a pulping process is to separate the wood fibres. Chemical pulping does this by means of degrading the lignin and parts of hemicellulose into small, water-soluble molecules, which can be washed away. Chemical pulping processes use a combination of high temperature and alkaline or acidic chemicals to break down the chemical bonds of the lignin. Well known processes are e.g. kraft (alkaline) and sulphite (neutral or acidic). The wood material, normally in the form of wood chips, is mixed in an aqueous solution of the pulping chemicals, and then heated with steam. After the treatment, the spent cooking chemicals and degraded lignin and hemicellulose is removed. The extracted liquid is concentrated and burned for energy recovery and the chemical compounds are recovered.

However, increasing cost pressure in the pulping industry has raised the wish to have a more profitable use of wood material components, which normally are washed away in the pulping process or e.g. used for energy production. Since the pulping industry is based on renewable raw material sources, that is growing trees and plants, also products using these normally washed-away wood materials would be based on renewable raw material sources. They would thereby fit well in a society increasingly aware of the environmental problems, especially if some of these products could replace products, which are today made of non-renewable raw materials, like fossil oil based products.

Today's pulping processes give rise to discharges of oxygen demanding substances, which are normally taken care of in biological purification of the outlet water. It is costly to build such purification plants. It would therefore be preferred to find new processes letting out less oxygen demanding substances.

Sundberg et al, WO 02/40767, describes a method for recovering non-fibrous substances from a wood material being processed in a mechanical pulping process. The recovering includes a step, wherein aromatic compounds are separated from a liquid fraction. The pH-level of the liquid fraction is typically between pH 4 and pH 6. As described in the document, it is advantageous to remove dissolved and colloidal substances, which would otherwise disturb bleaching processes and papermaking. The removed aromatic compounds can be valuable bio-active components for pharmaceutical and functional food applications. However, the suggested process is applicable for mechanical pulping, which by its nature is different from chemical pulping.

Torget et al, U.S. Pat. No. 5,424,417 discloses a prehydrolysis process, wherein at least 20% of the lignin is removed to obtain more purified cellulose. It is claimed to run the process with a dilute acidic liquid at pH levels of about pH 1.0 to about pH 5.5. The description also mentions the alternative use of an alkali.

Forss et al, U.S. Pat. No. 4,681,935 describes a procedure for recovery of soluble carbohydrates present in wood, by treating reflux liquor in a birch digestion by means of an ultrafiltration, wherein the treatment of the wood thereafter continues as an alkaline cellulose digestion process. The recovery is carried out at the initial phase of the cellulose digesting process by conducting the digesting solution to an ultrafiltration, separating the carbohydrates, and returning the filtered solution to the digestion process.

Sarkanen and Li, U.S. Pat. No. 6,172,204 teaches how a lignin derivate is used to provide a polymeric composition having mechanical properties which makes it useful as thermoplastics. Such lignin derivatives can be by-products of commonly used chemical pulping processes. The lignin derivatives are filtered prior to reaction to yield a relatively high molecular weight fraction, which is then reacted with an alkylating agent, acylating agent, or combination thereof. A plasticizer is used to cause the composition to exhibit plastic deformation. However, the patent does not mention how to make use of the dissolved oligo- and polysaccharides. The method described in the document is also dependent on using a chemical reaction to obtain the end product.

EP 287,960 disclose a process for the production of a hemicellulose hydrolysate and special pulp through two steps. The first step comprising the prehydrolysis of the material and the second step the dissolving of the lignin contained in the prehydrolyzed material. According to the process the lignin dissolving is carried out by means of a neutral sulphite cooking with anthraquinone or a derivative thereof as a catalyst, the pH of the cooking liquor being initially at least 10. Hence a strong alkali environment is used.

The methods in the above mentioned publications are bound to the use of chemicals to gain the proper compositions, while it from both environmental and economical points of view is preferred to use as little and as few chemicals as possible. In the documents mentioned above, an acid or an alkali is added during the process.

SUMMARY OF THE INVENTION

It is an object of the present invention to provide a solution which at least partly overcomes the problems mentioned above. At least a part of the above mentioned problems are solved by a method, according to claim 1. The method provides a cost efficient way of increasing the value of by-products achieved in a pulp making process. By means of the hydrothermal treatment, the wood material is treated with liquid water without addition of an acid or an alkali. The hydrothermal treatment provides a lenient treatment to the wood material, permitting the use of less tolerant process equipment than otherwise necessary. Avoiding the use of an acid or an alkali saves cost. The suggested method discharges less oxygen demanding substances than conventional processes, whereby the loading on the environment is less and costs can be saved by the decreased need for purification plants.

In the present invention, the wood residue is suitable for pulp production. Since the method suggests how to make use of the wood hydrolysate in valuable products, the total value of the output of the process is increased when compared to current pulp making processes, where only the wood residue is used as raw material, e.g. in paper making.

The wood material can be supplied in any industrial applicable form, but is preferably supplied as wood chips. Appropriate wood material is preferably the material used in the cellulose industry, such as the paper making industry, and is preferably selected from softwood material such as spruce, pine or the like. Different kinds of hardwood material such as birch, beech, aspen, eucalyptus or the like can also be used; combinations of softwood and hardwood material are also possible. Since all materials are wood-based, any products made of them will be based on a renewable raw material source.

The method is applicable with treatment of liquid water. The wood to water ratio should then be adapted accordingly.

The hydrothermal treatment is done at a temperature between 100 °C and 190 °C, preferably between 130 °C and 180 °C, and most preferably between 150 °C and 170 °C. The treatment time is ranging from 10 to 360 minutes, preferably between 30 and 180 minutes, and most preferably between 30 and 120 minutes. Normally, the hydrothermal treatment process is run without pressure control. The treatment is done in a closed vessel. The resulting pressure would be the pressure which arises from the process.

The wood hydrolysate resulting from the above-mentioned hydrothermal treatment of the wood material comprises a relatively low amount of lignin, typically less than 35 %, preferably less than 25 % of dry matter. The wood hydrolysate further comprises an amount of monosaccharides of about 10 -25 % of dry matter. The main component, of the dry matter of the wood hydrolysate comprises oligo- and polysaccharides in an amount of about >50 %, with respect to dry matter.

The separation of the at least first and second fraction is done by means of different molecular weight, wherein the first fraction has a higher molecular weight than the second fraction. The advantage of separating the at least first and second fraction is that it permits each separated fraction to be utilized to a specific purpose, as will be the shown in the following examples below. It is well within the boundaries of the present invention that the wood hydrolysate is separated into at least three fractions, or at least 4, 5, 6, or 7-15 fractions, dependent upon the forthcoming purpose and properties desirable of the intermediate or end product.

When separating the wood hydrolysate to at least a first and a second fraction, typically, the first fraction comprises at least 80 % of oligo- and polysaccharides, 5-15% of lignin 0-5% of monosaccharides and <0.1% ash, with respect to dry matter. The degree of substitution with acetyl groups is typically between 0.05 and 2.0, preferably between 0.1 and 1.5 and most preferably between 0.2 and 1.0, whereby good water solubility is secured. The average size of substantially all oligo- and polysaccharide in the first fraction obtained by this method are generally smaller than for those obtained with conventional wood extraction and fractionation methods. The, average size range is typically between 10 and 100 sugar units, preferably between 10 and 50 sugar units, and most preferably between 10 and 25 sugar units. The inventors has found that independent of these low molecular weights of the oligo- and polysaccharides, polymer products such as films can effectively be manufactured from this "raw material". Indeed, as will be shown in the following examples below, polymer products can be obtained even without further reaction agents, although this is an option.

The first fraction is a composition for producing a polymer product. The first fraction can then be mixed with at least one additional substance. The at least one additional substance could be e.g. a polysaccharide, preferably dissolved in a second aqueous solution. The first fraction might also be mixed with a plurality of different polysaccharides, preferably being in aqueous solution. When such at least one additional substance is mixed with the first fraction, the weight ratio between the first fraction and the polysaccharide or mix of polysaccharides ranges from 1:10 to 10:1, preferably between 1:5 and 5:1 and most preferably between 1:2 and 2:1. Optionally the mix of the first fraction and at least one additional substance is mixed with a plasticizer in a third aqueous solution and the resulting mix is used for producing the polymer product. The method works without using any organic solvent, which is positive for both the work safety as well as for the environment. The achieved polymer product made in this way is based on a renewable raw material source, wood material, and thus better for the environment than many other polymer products existing today, based on fossil oil.

In a preferred embodiment, the production of the above-mentioned polymer product is done by removing the aqueous solvent from the mix, that is to say without the addition of a reaction agent. It is to be noted that although the oligo- and polysaccharides bond together during the removing of the aqueous solvent, no reaction agent is added. Typical polymer products comprise films or coatings. Optionally, a gel might be produced by means of cross-linking. It is believed, without being bond by theory, that the easiness at which the aqueous solvent can be removed is at least partly because the oligo-and polysaccharides comprises a high degree of substitution of acetyl groups $Ds_{AC}$. Hence this is preferable. The degree of substitution is 0.05 and 2.0, preferably between 0.1 and 1.5 and even more preferably between 0.2 and 1.0, most preferred between 0.5-1.0. Such a high degree of substitution can be achieved by the above described method according to the present invention.

The second fraction could be used for making a monomer product. It is possible to use only the first fraction or only the second fraction, but it is preferred to make use of both, which also normally gives the highest total value of the output from the process. In a preferred embodiment, the second fraction is used for producing a monomer product. The production might be made by means of a biochemical or chemical conversion.

As an example, the second fraction can be fermented to produce ethanol, which in turn can be used e.g. as fuel. Lactic acid is another useful monomer obtained form the second fraction.

The above mentioned separation of said first and second fraction could be done in many ways. One way is by means of membrane filtration comprising at least one membrane, e.g. ultra filtration. The at least one membrane should then have a cut-off between 1000 and 15000 Da, preferably between 1000 and 5000 Da. An alternative way of separation is by means of solvent fractionation.

Continuing with the first fraction, a hydrolysate derived from above-mentioned hydrothermal treatment of a wood material which is thereafter fractioned by means of membrane filtration, comprises at least 80 % of oligo- and polysaccharides, 5-15% of lignin 0-5% of monosaccharides and <0.1% ash . The degree of substitution with acetyl groups is typically between 0.05 and 2.0, preferably between 0.1 and 1.5 and most preferably between 0.2 and 1.0, whereby good water solubility is secured. An average size of the oligo- and polysaccharides comprises 10-100 sugar units, preferably 10-50 sugar units and most preferably 10-25 sugar units.

In one embodiment the polymer product further comprises at least a second polysaccharide different from the oligo-and polysaccharides, which were derived from the above-mentioned wood material. The ratio between the oligo- and polysaccharides derived from the above-mentioned wood material and the at least a second polysaccharide is between 1:10 and 10:1, preferably between 1:5 and 5:1 and most preferably between 1:2 and 2:1. Optionally the polymer product can also comprise a plasticizer. By appropriate choice of the optional at least a second polysaccharide as well as the optional plasticizer, the properties of the polymer product can be adopted to get the desired product properties.

As has been discussed, the high oligo- and polysaccharide content fraction would at first glance be deemed less attractive due to the low amount of sugar units, i.e. < 100 units per oligo- and polysaccharide as mentioned above. The inventors, however, have found that this fraction can advantageously be utilized in the manufacturing of polymer products. Such polymer products are e.g. films and coatings. The achieved degree of substitution with acetyl groups contributes to the good properties of the films or coatings. The polymer products have been found to be particularly useful as gas barrier films or coatings. Hence, in a preferred embodiment of the present invention, the polymer product is a substantially gas impermeable film or coating. Such a film or coating has been found to be particularly effective to prevent air related gases such as oxygen, nitrogen, helium, carbon monoxide, carbon dioxide, or the like, from penetrating. The inventors has there discovered that a polymer product according to the present invention, can advantageously be implemented in the e.g. the food industry and especially for food which is sensitive to air contamination, and more specifically oxygen contamination. The film or coatings can be used as oxygen barriers for all kinds of foodstuff which are sensitive for oxygen contamination. Examples are drink packages, wrap films, sealing membranes, drink cups, or the like. They can also be used to protect fat-containing foodstuff, which are sensitive to oxygen, like potato chips. The film or coating could also be used to protect other objects than food, e.g. sensitive electronic components. The gas barrier film or coating can be arranged as a single layer or a multiple layer, which in turn can be arranged on a single or multiple layered support layer(s). It is thereby possible to provide a biodegradable and a renewable product as an alternative to e.g. a plastic layer, where the plastic might be produced from a non-renewable resource, such as fossil oil.

As will be shown below, the gas barrier properties of a polymer product, such as a film or a coating, according to the present invention have been found to be excellent. The gas barrier properties can be illustrated by the oxygen gas transmission rate. The oxygen gas transmission rate is less than 100 $cm^3$ / $m^2$ 24h, preferably less than 10 $cm^3$ / $m^2$ 24h and most preferably less than 2 $cm^3$ / $m^2$ 24h, for a polymer product, such as a film or a coating according to the present invention.

BRIEF DESCRIPTION OF THE DRAWINGS

The present invention will hereafter be described in greater detail with reference to the following figure, wherein;

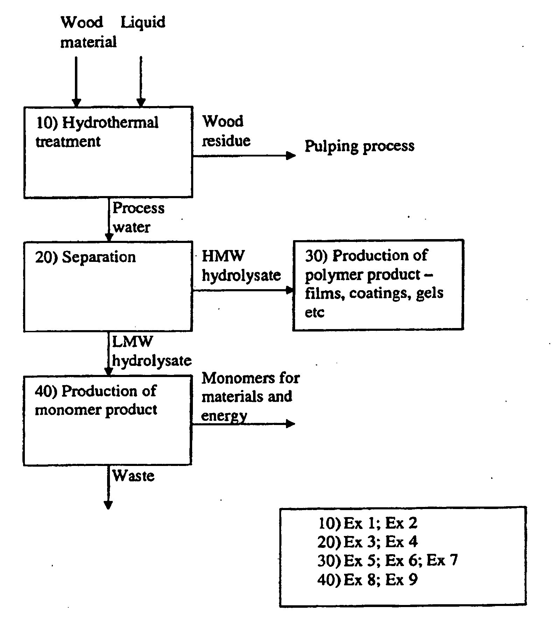

FIG. 1 is a schematic flow chart of the utilization of a wood hydrolysate.

DEFINITIONS

By the term "main component" is hereby meant that the oligo- and polysaccharides are present as the largest group of components of dry material in the hydrolysate, preferably above 33% or more preferably 50 % or more of dry material in the hydrolysate.

DETAILED DESCRIPTION OF PREFERRED EMBODIMENTS

Figure 1 shows a schematic flow chart of the utilization of a wood hydrolysate according to the present invention in the form of parts of a pulp manufacturing process. The parts of the pulp manufacturing process comprise a first treatment step 10 in which at least a liquid and wood material are mixed. Appropriate wood material is preferably material used in the cellulose industry, such as the paper making industry, and is preferably selected from softwood material such as spruce, pine or the like. Different kinds of hardwood material such as birch, beech, aspen, eucalyptus or the like can also be used; combinations of softwood and hardwood material are also possible. The wood material is preferably supplied as wood chips. The liquid used in the first treatment step is water.

The different blocks of the schematic flow chart of figure 1 will be described in greater detail below with reference to Figure 1. In the first treatment step 10, the wood material is subjected to the hydrothermal treatment until the non-cellulosic polysaccharides are substantially dissolved, by means of heating the liquid for a period of time. The mixture is heated to a temperature typically between 100°C and 190°C, preferably between 130°C and 180°C, and most preferably between 150°C and 170°C. The temperature is thereafter maintained during the hydrothermal treatment. Pressure is not controlled. The treatment is done in a closed vessel. The resulting pressure would be the pressure which arises from the process. Typically such hydrothermal treatment time ranges from 10 to 360 minutes, preferably between 30 and 180 minutes, and most preferably between 30 and 120 minutes. The hydrothermal treatment can be performed in continuous liquid flow autoclaves (digesters), batch autoclaves (digesters) or other suitable apparatus.

The hydrothermal treatment of the wood material provides a wood hydrolysate with oligo- and polysaccharides as main component and more specifically oligo- and polysaccharides comprising a relatively low number of sugar units.

After the wood material has been subjected to the hydrothermal treatment two resultant products can be identified; namely a wood residue and a wood hydrolysate. The wood residue is transferred to a subsequent pulping process after the hydrothermal treatment in the first treatment step 10 is finished. A suitable process would be alkaline pulping to get dissolving pulp, but also other pulping processes are possible. Hence the present invention will extend the range of products from a pulping process. According to the invention all components could be used for making products.

According to the present invention, the wood hydrolysate, which comprises oligo- and polysaccharides as the main component, is in a following process step 20 separated into at least a first fraction and a second fraction. At least one of said fractions is then used for production of an intermediate or end product.

It is preferred to separate the wood hydrolysate into the at least two fractions by means of molecular weight, thereby getting a first fraction with a higher molecular weight than the second fraction. In the following description the first fraction will be denoted HMW, high molecular weight, and the second fraction LMW, low molecular weight.

In an embodiment of the present invention, the separation is done by filtration. A preferred way would be to use ultrafiltration. When filtration is used, the membranes should have a cut-off between 1000 and 15000 Da, preferably between 1000 and 5000 Da.

In an embodiment of the present invention, the separation is done by means of solvent fractionation. Different organic solvent or solvents, which is/are mixable with water, can be used, e.g. ethanol, methanol, acetone and isopropanol. The solvent is mixed with the wood hydrolysate and the mixture is stirred until a precipitate is obtained. The precipitate, containing mainly oligo- and polysaccharides is separated from the mixture and makes up the high molecular weight (HMW) fraction. The dissolved material retained in the supernatant contains mainly mono- and oligosaccharides. The LMW fraction can be recovered by evaporating the solvent mixture.

Other separation techniques capable of separating the wood substances into suitable fractions, e.g. crystallization and precipitation, can also be used.

As mentioned above at least one of the fractions is used for production of an intermediate or end product. Preferably, both fractions are used, but for different intermediate/end products. For example, the HMW fraction could be used for producing a polymer product, process step 30, and the LMW fraction for production of monomers, process step 40.

Some suitable polymers products that can be obtained from the HMW fraction include films, coatings and hydrogels. By coatings is here meant material layers which are attached continuously to the surface of an object or another material layer.

In an embodiment, the HMW fraction is dried after separation. Thereby the durability of the HMW fraction is improved and the material can easily be stored or transported.

In another embodiment, the HMW fraction is not dried before being used for production of a polymer product, thereby saving energy and cost.

The step of producing a polymer product can optionally comprise mixing the HMW fraction with a polysaccharide or a mixture of different polysaccharides. If the wood hydrolysate is in a dry state, i.e. if it has been dried after the separation step, it is prepared for mixing by dissolution in water. The polysaccharide, or the mixture of polysaccharides, should preferably be in an aqueous solution, i.e. they have been dissolved or suspended in water, before being added to the wood hydrolysate. The weight ratio between the HMW fraction and the polysaccharide, or the mixture of polysaccharides, may vary from 1:10 to 10:1, preferably between 1:5 and 5:1 and most preferably between 1:2 and 2:1, counted on dry mass. Optionally one or several plasticizers can be added. A typical dry matter concentration of the resulting water solution is 0.03 g/ml.

Representative polysaccharides include: carboxymethylcellulose (CMC), chitosan, and microfibrillated cellulose. If chitosan is the polysaccharide component, 1% (v/v) of acetic acid is added to the polysaccharide water solution to facilitate dissolving. If a plasticizer is added, a typical concentration is 10 % (w/w) of the solids portion. Representative plasticizers include: oligomeric fats, polyols, xylitol, and glycerol. The resultant water solution is preferably homogenized, for example by intense stirring at slightly elevated temperatures, like 40-50°C.

The water solution is thereafter poured onto a flat surface in a confined container, i.e. a cast, so as to form a relatively thin liquid layer. The water is then removed until the thin liquid layer is completely dry, producing a thin dry film, that can be manually removed from the used container. The water can be removed e.g. by means of evaporation, freeze drying or a convection oven.

In another preferred embodiment, the polymer product is a coating. The conditions and components are similar as in film preparation described above. Typically however, the water solutions are more concentrated. The water solution is cast or otherwise spread upon the surface of which the coating is supposed to reside. The water is removed until the coated layer is dry.

Such a film or coating could act as a gas barrier layer. A typical application for such a coating is as an oxygen barrier layer in multilayered packaging materials, such as liquid food packaging for foodstuffs that are sensitive towards oxygen, e.g. orange juice, tomato juice or the like.

In a third preferred embodiment, the HMW fraction is used for forming hydrogels, e.g. by means of cross-linking.

Of course, the production of a polymer product is not restricted to one of the ways mentioned above; two or more ways could be used at the same time.

The low molecular weight fraction (LMW) of the wood hydrolysate could be up-graded into a monosaccharide mixture suitable as raw material for chemical or biochemical conversion, e.g. fermentation. For this purpose several different methods can be employed that hydrolyse the oligosaccharides, being part of the LMW fraction, down to monosaccharides. For example, hydrolysis employing a mineral acid (e.g. sulphuric acid, hydrochloric acid) or strong organic acid (e.g. trifluoroacetic acid, formic acid) or hydrolysis procedures employing enzymes could be used. The obtained monomers could be used as raw materials for production of e.g. ethanol, lactic acid or succinic acid or for energy production.

TEST METHODS

The carbohydrate and lignin compositions of the wood hydrolysates and separated hydrolysates were determined by employing the hydrolysis conditions described in the TAPPI -standard method (T 249 cm-00, Carbohydrate Composition of Extractive-Free Wood and Wood Pulp by Gas Chromatography. Atlanta, TAPPI Press). However, in the examples below, the sugars obtained after the hydrolysis step were determined by ion-exchange chromatography (IC) employing a Dionex DX500 IC analyzer equipped with a gradient pump (Dionex, GP50), electrochemical detector (Dionex, ED40), Dionex, PA1 separation column, and applying a sodium hydroxide/acetate gradient buffer eluent.

The quantity of monosaccharides in wood and up-graded hydrolysate samples were determined by injecting the samples directly into the IC analyzer without any prior acid depolymerization and calculating the sum of individual monosaccharides detected. The quantity of oligo- and polysaccharides was obtained by subtracting the quantity of monosaccharides from the total quantity of carbohydrates (determined following acid hydrolysis). The lignin content was determined as the sum of the acid insoluble residue after hydrolysis (Klason lignin) and the acid soluble lignin part (determined spectrophotometrically at 205 nm).

The compositions of the modified wood hydrolysate (Example 7) were determined by $^1$H NMR spectroscopy (NMR = Nuclear Magnetic Resonance). The spectra were recorded on a Bruker Avance DPX-400 NMR spectrometer operating at 400,13 MHz. The samples were prepared by dissolving in DMSO-$d_6$ in a 5 mm diameter sample tube.

The degree of substitution with acetyl groups ($Ds_{Ac}$) for the saccharides in the up-graded hydrolysate samples (HMW 1-5, denotation from Examples below) was calculated from the quantity of acetyl residues (as determined by alkaline hydrolysis followed by Ion Chromatography, IC) and the carbohydrate composition of the freeze dried hydrolysates. A weighed portion of the dry hydrolysate sample was first dissolved in 2 mL 1.0 M sodium hydroxide and then treated at 80 °C for 1 h in order to cleave the sugar acetate ester linkage. After filtering trough a Teflon filter, an aliquot (0.20 mL) of the filtered alkaline hydrolysate was diluted to 10 mL with pure water. The quantity of acetate ions in the diluted alkaline hydrolysate was subsequently determined by IC employing a Dionex ICS-2000 Ion Chromatography System (with an electrochemical detector), Dionex, GA15 guard column, SA15 separation column, and applying a potassium hydroxide (35 mM) buffer eluent.

The molecular weight parameters for the high molecular weight wood hydrolysates, HMW 1-5 (denotation from Examples below), were determined by employing aqueous size exclusion chromatography. Pre-filtered hydrolysates (containing approximately 1 mg dry matter) were injected into the SEC column system which consisted of three columns containing Ultrahydrogel 120, 250 and 500 (Waters Assoc. USA), respectively. The columns were linked in series to each other and to a refractometer (Waters Assoc. USA). The eluent system utilized was 50 mM ammonium acetate pH 7. The signal from the refractometer was processed on a standard PC using the PL Caliber SEC software and interface (Polymer Laboratories Ltd., UK).

The stress-strain behaviour of the films was determined using an Instron 5566 equipped with a 0.1 kN load cell, pneumatic grips and controlled by a Bluehill 2 software. Testing was performed in a conditioned room at 50% relative humidity according to ASTM D 638M-89 standard test method only that the crosshead speed was reduced to 5 mm/min. Films were cut into dog bone-shaped samples with a width of 4 mm and a gauge length of 35 mm. The given values are an average of 3 measurements. The thickness values were averages calculated from 10 consecutive measurements with a Mitutoyo micrometer.

The oxygen gas transmission rate of some of the films was measured using Mocon Ox-Tran 2/20 equipment. Testing was performed at a temperature of 23 °C, 50% relative humidity and one atmosphere oxygen pressure according to ASTM F 1927-98 (Standard test method for determination of oxygen gas transmission rate, permeability and permeance at controlled relative humidity through barrier materials using a coulometric detector).

EXAMPLES

Below different embodiments of the present invention will be described by using different non-limiting examples.

Hydrothermal treatment using continuous liquid flow autoclaves.

Example 1 A

Industrial chips (2.3 kg), obtained from spruce (Picea abies) with a dry content of 42 % and screened on a laboratory screen passing 8 mm but not 2 mm, was charged to a continuous liquid flow autoclave. Hot water (4.6 L, L=litres) preheated to 165°C was flushed into the autoclaves from a pressurized vessel connected to the autoclave to give a treatment liquid-to-wood ratio 6:1 (volume to mass ratio). The autoclave was kept at 165°C for 30 minutes hydrothermal treatment of the wood material. Then a portion of the treatment liquid (-4.5 L) was displaced during approximately 5 minutes by the corresponding volume preheated fresh water. The hot (165°C) wood hydrolysate liquid displaced was collected in a second pressurized vessel connected to the autoclave. The hydrothermal wood treatment was then continued in the autoclave with the fresh hot water portion for an additional 30 minutes after which also this second wood hydrolysate liquid was displaced into the pressurized collection vessel. The total volume of the two combined wood hydrolysates collected after the hydrothermal treatment was 10.3 L and the pH was 4.0. The total yield of wood substances isolated with the hydrolysate corresponded to 11.0 %, calculated on basis of the dry wood chips charged in the autoclave. The composition of the wood hydrolysate, denoted WH 1, is given in Table 1.

Example 1 B

Example 1 B was conducted in a similar manner as Example 1 A, industrial spruce chips (2.3 kg, with a dry content of 42 %) from the same laboratory screened batch was charged to the continuous liquid flow autoclave. Also in this case hot water (4.6 L) preheated to 165°C, was flushed into the autoclaves from a pressurized vessel to give a treatment liquid-to-wood ratio 6:1 (volume to mass ratio). However, this time the hydrothermal treatment was carried out for 60 minutes at 165°C before displacing the wood hydrolysate liquid with fresh preheated water. The displaced wood hydrolysate liquid was collected in the pressurized vessel. The hydrothermal treatment of the wood material was continued with the fresh water portion in the autoclave for 30 minutes. Finally, this second wood hydrolysate liquid was displaced into the pressurized collection vessel and combined with the first hydrolysate. The total volume of the wood hydrolysate obtained was 10.3 L and the pH 3.8. The total yield of wood substances isolated with the hydrolysate corresponded to 15.1 %, calculated on dry wood chips. The composition of the wood hydrolysate, denoted WH 2, is given in Table 1.

Hydrothermal treatment using batch autoclaves.

Example 2

Wood hydrolysate was prepared from wet wood chips obtained from spruce (Picea abies) and screened on a laboratory screen passing 8 mm slot but not 7 mm hole. The wood chips were steamed for 45 min at 110 - 120°C. High temperature water was added until a treatment liquid-to-wood ratio 6:1 (volumes to mass ratio) was reached. The mixture of spruce wood chips and water was heated to reaction temperature 150°C. Required heating time was typically 40 min. Processing time at the reaction temperature was 60 min. Wood hydrolysate was drained off. The total yield of wood substances isolated with the hydrolysate corresponded to 6.8 %, calculated on basis of the dry wood chips. The composition of the wood hydrolysate, denoted WH 3, is given in Table 1.

Wood hydrolysate was also prepared at 160°C and 170°C using the same method for preparation. Heating time to reaction temperature was typically 47 min (160°C) and 53 min (170°C). The yield of wood substances isolated with the hydrolysates after the 160°C and 170°C treatments corresponded to 11.4 % and 15.0 %, respectively, calculated on basis of the dry wood chips. The compositions of the wood hydrolysate, denoted WH 4 and WH 5 respectively, are given in Table 1.

Values of pH of the wood hydrolysates were typically 3.8.

Table 1. Composition of the Wood Hydrolysates, WH1- 5, obtained by hydrothermal treatment of wood materials.

| Wood hydrolysate | Composition, % of dry matter | | | |
|---|---|---|---|---|
| | Monosaccharides | Oligo- and polysaccharides | Lignin | Ash |
| WH 1 | 20.7 | 53.2 | 22.1 | 4.1 |
| WH 2 | 22.7 | 54.1 | 20.3 | 3.0 |
| WH 3 | 14.8 | 56.1 | 22.2 | 6.9 |
| WH 4 | 13.9 | 65.9 | 17.9 | 2.4 |
| WH 5 | 18.1 | 66.2 | 15.7 | n.a. |

Up-grading and fractionation by membrane filtration.

Example 3

The following procedure was followed for each of the wood hydrolysates obtained as described in Example 1 and 2 (wood hydrolysates WH 1-5):

A volume of 20 litre (L) of the wood hydrolysate was up-graded by fractionation using membrane filtration, in this case ultrafiltration, employing a tangential flow filtration cartridge unit equipped with a regenerated cellulose membrane (PLAC Prepscale, Millipore) with a nominal cut-off 1000 Da. The membrane filtration was performed to concentrate the retentate (the high molecular weight fraction) down to 2 L and thus giving 18 L permeate (the low molecular weight fraction). The high molecular weight fraction (HMW) was purified further by diluting it with water to 10 L and then again membrane filtering down to a volume of 2 L (so called diafiltration procedure). The yield of high molecular weight materials (denoted HMW 1- 5) thus obtained from the wood hydrolysates WH 1-5, by membrane filtration and diafiltration varied between 1.3 % and 3.2 % calculated on basis of the wood chips employed for obtaining the hydrolysates.

The compositions of the up-graded and fractionated wood hydrolysates HMW 1- 5 are given in Table 2 and the molecular weight parameters are outlined in Table 3 (determined by aqueous size exclusion chromatography). The high degree of acetylation contributes to good water solubility. This would be helpful when making films or coatings from the wood hydrolysate.

Table 2. Composition of the up-graded wood hydrolysates HMW 1- 5 obtained by membrane filtration and the degree of substitution with acetyl groups ($Ds_{Ac}$) for the saccharides.

| Up-graded wood hydrolysate | Composition, % of dry matter | | | | $Ds_{AC}$ |
|---|---|---|---|---|---|
| | Monosaccharides | Oligo- and polysaccharides | Lignin | Ash | |
| HMW 1 | 0.8 | 88.8 | 10.4 | <0.1 | 0.7 |
| HMW 2 | 1.4 | 89.9 | 8.7 | <0.1 | 0.7 |
| HMW 3 | 1.7 | 89.0 | 9.3 | <0.1 | 0.5 |
| HMW 4 | 2.0 | 90.1 | 7.9 | <0.1 | 0.7 |
| HMW 5 | 2.8 | 88.5 | 8.6 | <0.1 | 1.0 |

Table 3. Molecular weight parameters for the up-graded wood hydrolysates HMW 1-5 determined by aqueous size exclusion chromatography.

| Up-graded wood hydrolysate | Molecular weight parameters | | |
|---|---|---|---|
| | Mw | Mn | Mw/Mn |
| HMW 1 | 4300 | 3300 | 1.3 |
| HMW 2 | 2900 | 2300 | 1.3 |
| HMW 3 | 4600 | 3400 | 1.3 |
| HMW 4 | 3500 | 2600 | 1.3 |
| HMW 5 | 2100 | 1600 | 1.3 |

Up-grading and fractionation by organic solvent fractionation.

Example 4

The following procedure was followed for each of the wood hydrolysates obtained as described in Example 1 and 2 (wood hydrolysates WH 1- WH 5):

One volume (50 mL) of the wood hydrolysate (WH 1- 5) was mixed with nine volumes ethanol (450 mL), stirred for 30 minutes to give a cloudy voluminous precipitate and then left standing cold (~ 8°C) over night. The voluminous precipitate, which was recovered by centrifugation and decantation, contained mainly oligo- and polysaccharides with small quantities of lignin and thus constituting the high molecular weight fraction (HMW fraction, yield 1.0-2.1 %) The dissolved material retained in the supernatant contained mainly mono- and oligosaccharides, i.e., the low molecular weight (LMW) fraction. This LMW fraction was recovered in solid form by evaporating the solvent mixture.

Preparation of polymer product - film preparation

Example 5A

A high molecular weight fraction of each wood hydrolysate had been obtained according to Examples 1 to 4 above (HMW 1-5), and thereafter freeze dried. As a first step the freeze-dried hydrolysate HMW 1 was dissolved in water to get a hydrolysate water solution. An equal amount of chitosan was dissolved in water. 1% (v/v) of acetic acid was added to the chitosan water solution to facilitate dissolving. The chitosan-acetic acid water solution was added to the hydrolysate water solution. The dry matter concentration of the resultant water solution was 0.03 g/mL. The resultant water solution was homogenized, by intense stirring at slightly elevated temperatures, 40-50°C. The water solution was thereafter cast in flat Petri dishes with a diameter of 10 cm. The water was allowed to slowly evaporate at room temperature until it was completely dry, producing thin, dry films that were manually removed from the Petri dishes. The same procedure was followed for HMW 2 to HMW 5. The mechanical properties of the film are found as Film Type 1 in Table 4.

Example 5B

A high molecular weight fraction of each wood hydrolysate had been obtained according to Examples 1 to 4 above (HMW 1-5), and thereafter freeze dried. As a first step the freeze-dried hydrolysate HMW 1 was dissolved in water to get a hydrolysate water solution. An equal amount of CMC (Carboxymethylcellulose sodium salt, BioChemika, ultra low viscosity, Art No 21901 from Fluka) was dissolved in water. The CMC water solution was added to the hydrolysate water solution. The dry matter concentration of the resultant water solution was 0.03 g/mL. The film was then made in the same way as in Example 5A. The same procedure was followed for HMW 2 to HMW 5. The oxygen gas transmission rate measured for the films made from HMW2 and HMW3 was 1.64 and 1.61 cm$^3$/ m$^2$ 24h, respectively. The mechanical properties are found as Film Type 2 in Table 4.

Example 5C

A high molecular weight fraction of each wood hydrolysate had been obtained according to Examples 1 to 4 above (HMW 1 to HMW 5), and thereafter freeze dried. As a first step the freeze-dried hydrolysate HMW 1 was dissolved in water to get a hydrolysate water solution. An equal amount of micro-fibrillated cellulose (of softwood pulp, supplied as 2% in a water suspension) was dissolved in water. The micro-fibrillated cellulose water solution was added to the hydrolysate water solution. The dry matter concentration of the resultant water solution was 0.03 g/mL. The film was then made in the same way as in Example 5A. The same procedure was followed for HMW 2 to HMW 5. The mechanical properties are found as Film Type 3 in Table 4.

Example 5D

A high molecular weight fraction of each wood hydrolysate had been obtained according to Examples 1 to 4 above (HMW 1-5), and thereafter freeze dried. As a first step the freeze-dried hydrolysate HMW 1 was dissolved in water to get a hydrolysate water solution. Then CMC (Carboxymethylcellulose, Art No 21901 from Fluka) was dissolved in water. The CMC water solution was added to the hydrolysate water solution. Thereafter glycerol was added as a plasticizer. Ratios between HMW:CMC:glycerol was 4:1:1 counted as dry mass. The dry matter concentration of the resultant water solution was 0.03 g/mL. The film was then made in the same way as in Example 5A, giving good film properties.

Table 4. Mechanical properties of produced films.

| Film type | HMW# | Thickness* | Strain at break** | Stress at max. load** | E-modulus** |
|---|---|---|---|---|---|
| | | ($\mu$m) | (%) | (MPa) | (MPa) |
| 1 | 1 | 37 | 3.8 | 87.0 | 4256 |
| | 2 | 35 | 2.4 | 71.6 | 4485 |
| | 3 | 39 | 2.8 | 82.8 | 4289 |
| | 4 | 32 | 2.6 | 57.9 | 2764 |
| | 5 | 37 | 1.9 | 58.0 | 3787 |
| 2 | 1 | 27 | 1.0 | 47.4 | 5460 |
| | 2 | 34 | 1.1 | 36.4 | 8093 |
| | 3 | 26 | 1.1 | 20.8 | 2293 |
| | 4 | 29 | 0.5 | 21.0 | 2540 |
| | 5 | 18 | 1.0 | 24.4 | 2472 |
| 3 | 1 | 35 | 0.9 | 31.6 | 5130 |
| | 2 | 32 | 0.9 | 23.9 | 3540 |
| | 3 | 39 | 1.0 | 31.8 | 3897 |
| | 4 | 30 | - | - | - |
| | 5 | 37 | 4.1 | 9.9 | 1105 |

\* = average of 10 individual measurements
\*\* = average of 3 individual measurements

Coatina preparation

Example 6

A high molecular weight fraction of each wood hydrolysate, obtained according to examples 1 to 4 above (HMW 1 to HMW 5), and thereafter freeze dried, was mixed with a polysaccharide and optionally a plasticizer. The conditions and components for mixing are similar as in film preparation described in Example 5. Typically however, the water solutions were more concentrated than in example 5. The resultant water solution was homogenized, for example by intense stirring at slightly elevated temperature. The water solution was cast onto or otherwise spread upon the surface of a thin cardboard. The water was allowed to evaporate until the coated layer was dry. The cardboard was thereafter utilized to manufacture a liquid cardboard container, such as a milk package. The coating is then acting as a gas barrier layer.

Hydrogel preparation

Example 7

Wood hydrolysate (HMW4), isolated, up-graded, and dried as described in previous examples was used for preparation of hydrogels according to the method described in Macromol. Rapid Commun., 22, 962-967 (2001). Methacrylolated hydrolysate was typically prepared by dissolution of 0.7 g hydrolysate in 42 mL DMSO (dimethylsulfoxide) and addition of 0,9 g 2-[(1-imidazolyl)formyloxy] ethyl methacrylate. 81 mg triethylamine was added as catalyst. The reaction mixture was maintained 16-24 hours at 45°C under stirring. The product was precipitated two times in ethyl acetate as light brown crystals and the solvent was poured off. Eventually the product was dried under vacuum for about 16 hours. Yield: 43-60%. Degree of modification, analyzed by $^1$H NMR, was 12 - 22%. $^1$H NMR (DMSO-$d_6$): $\delta$ = 1.88 (s, 3 H, $CH_3$-); 2.0-2.1 (s, 3 H, $CH_3$-CO, acetyl); 4.31 (m, 4 H, $CH_2$-O); 5.71, 6.06 (s, 1 H, each vinyl C-H).
Typical conditions for preparation of the hydrogels in the table were: 100 mg methacrylated hydrolysate with different degree of modification and 100 mg 2-hydroxyethyl methacrylate (HEMA) were polymerized in 210 mg water, using a mixture of ammonium peroxodisulfate (0.4 mg) and sodium pyrosulfite (0.4 mg) as a radical initiator system. The polymerizing solution was first injected into a circular mold (0 8 mm) having 3 mm thickness, and then it was heated up to 40°C and finally maintained at this temperature for some 180 min.
Swelling tests were performed by immersing 45 to 120 mg of hydrogel in an abundant amount of water (pH 7.0) at room temperature. The swelling of the material was calculated from the weight of the material before and after drying:

$$\text{Swelling ratio (\%)} = (W_s - W_d)/W_d$$

where $W_s$ and $W_d$ are the weights of the samples in the swollen state and after drying, respectively.
The hydrogels were in general elastic, soft and easily swellable in water.

Table 5. Composition of hydrogels.

| Code | Degree of modification in polysaccharide, % | Synthetic co-monomer | Swelling ratio, % |
|---|---|---|---|
| HVG411 | 12 | HEMA | 255 |
| HVG421 | 22 | HEMA | 167 |

Hydrolysis employing sulphuric acid.

Example 8

30 volumes (90 mL) of the low molecular weight wood hydrolysate (LMW fraction) obtained by membrane filtration (Example 3) was mixed with one volume (3 mL) 72 % sulphuric acid and heated at 110°C for 2 hours in an autoclave. The autoclaved hydrolysate solution thus obtained was cooled to room temperature and neutralized using aqueous barium hydroxide solution (alternatively saturated aqueous calcium hydroxide solution or treatment with ion-exchange resins). The inorganic precipitate form was removed by filtration and the filtrate subjected to evaporation thus yielding the crude monosaccharide mixture suitable as raw material for biochemical conversion.

Hydrolysis employing enzymes.

Example 9

The enzymatic hydrolysis of the low molecular weight wood hydrolysate (LMW fraction) was carried out according to the method described by Dahlman, et al., in J Chromatogr. A. 891, 157-174 (2000). About 10 volumes (10 mL) of the LMW fraction obtained by membrane filtration was treated with a one volume (1 mL) of a mixture of cellulases and hemicellulases solution (estimated activity; 700 NCU, 250 CbU, 500 XYU and 200 EGU) including the commercially available Celluclast 1.5 L and Novozym 188 preparations from Novo Nordisk A/S (Bagsvaerd, Denmark). The treatment was done at pH 4.0 (adjusted by adding a suitable quantity sodium acetate buffer) and left at a temperature 40°C over night. The monosaccharide solution thus obtained could either be used directly without any purification as raw material for further biochemical conversion or purified by gel filtration (e.g. using PD-10 gel filtration column, GE Healthcare) using pure water as the eluent followed by drying.

**Claims**

1. A method for utilizing a hydrolysate from a wood material, such as wood chips, that said method comprises the steps of

    - providing a wood material,
    - treating said wood material, so that a wood hydrolysate and a wood residue is formed, said wood residue being suitable for pulp production, said wood hydrolysate comprising oligo- and polysaccharides as the main component of dry matter,
    - separating said wood hydrolysate into at least a first and a second fraction by means of different molecular weight, wherein said first fraction has a higher molecular weight than said second fraction,
    **characterized in that**
    said treatment of said wood material is done by means of a hydrothermal treatment with liquid water and;
    - using said first fraction for producing a polymer product.

2. The method according to claim 1, **characterized in that** said wood residue is used for pulp production.

3. The method according to claim 1, **characterized in that** said first fraction comprises at least 80 % of oligo- and polysaccharides, 5-15% of lignin, 0-5% of monosaccharides and <0.1 % ash, with respect to dry matter.

4. The method according to claim 1 or 3, **characterized in that** the degree of substitution with acetyl groups for the saccharides in said first fraction is between 0.05 and 2.0, preferably between 0.1 and 1.5 and even more preferably between 0.2 and 1.0, most preferred between 0.5-1.0.

5. The method according to claim 1, **characterized in that** said first fraction is mixed with at least one additional substance.

6. The method according to claim 5, **characterized in that** said additional substance is at least one polysaccharide, said at least one polysaccharide preferably being in a second aqueous solution, and **in that** said mix is used for producing said polymer product.

7. The method according to claims 5 or 6, **characterized in that** said first fraction is mixed with a plasticizer in a third aqueous solution and that said mix is used for producing said polymer product.

8. The method according to claims 6 or 7, **characterized in that** the weight ratio between said first fraction and said polysaccharide is from 1:10 to 10:1, preferably from 1:5 to 5:1 and most preferably between 1:2 and 2:1.

9. The method according to any of claims 1, or 5-8, **characterized in that** said polymer product is produced by removing said aqueous solvent from said mix.

10. The method according to any of the claims 1-9, **characterized in that** said polymer product produced from said first fraction is a film.

11. The method according to any of claims 1-9, **characterized in that** said polymer product produced from said first fraction is a coating.

12. The method according to any of claims 1-9, **characterized in that** said polymer product produced from said first fraction is a gel.

13. The method according to claim 12, **characterized in that** cross-linking is used to form said gel.

14. The method according to any of the preceding claims, **characterized in that** said second fraction is used for making a monomer product.

15. The method according to claim 14, **characterized in that** biochemical or chemical conversion is used for producing said monomer product.

16. The method according to claim 15 **characterized in that** said biochemical or chemical conversion is fermentation and that said produced monomer product is ethanol.

17. The method according to claim 16 **characterized in that** said biochemical or chemical conversion is fermentation and that said produced monomer product is lactic acid.

18. The method according to any of the preceding claims, **characterized in that** the wood material is supplied as wood chips.

19. The method according to any of the preceding claims, **characterized in that** the wood material is softwood.

20. The method according to any of claims 1-18, **characterized in that** the wood material is hardwood.

21. The method according to any of claims 1-18, **characterized in that** the wood material is a combination of softwood and hardwood.

22. The method according to any of the preceding claims, **characterized in that** said separation is done by filtration.

23. The method according to claim 22, **characterized in that** said separation is done by means of an ultrafiltration device comprising at least one membrane.

24. The method according to claim 23, **characterized in that** said at least one membrane has a cut-off between 1000 and 15000 Da, preferably between 1000 and 5000 Da.

25. The method according to any of the claims 1-21, **characterized in that** said separation is made by means of solvent fractionation.

26. The method according to any of preceding claims, **characterized in that** said hydrothermal treatment is done at a temperature between 100°C and 190°C, preferably between 130°C and 180°C, and most preferably between 150°C and 170°C.

27. The method according to any of preceding claims, **characterized in that** the time for said hydrothermal treatment is ranging from 10 to 360 minutes, preferably between 30 and 180 minutes, and most preferably between 30 and 120 minutes.

28. The method according to any of the preceding claims, **characterized in that** said wood hydrolysate further comprises a low amount of lignin.

29. The method according to claim 28, **characterized in that** that said low amount of lignin is less than 35 %, preferably less than 25 % of dry matter.

30. The method according to any of the preceding claims, **characterized in that** said wood hydrolysate further comprises an amount of monosaccharides of about 10 - 25 % of dry matter.

31. A polymer product derived from a composition, said composition being derived from a hydrothermal treatment of a wood material with liquid water, **characterized in that** said polymer product comprises at least 80 % of oligo- and polysaccharides, 5-15% of lignin, 0-5% of monosaccharides and <0.1% ash, with respect to dry matter and **in that** said saccharides exhibit a high degree of substitution of acetyl groups ($Ds_{AC}$), said degree of substitution is between 0.05 and 2.0.

32. The polymer product according to claim 31 **characterized in that** a majority of said oligo- and polysaccharides comprises 10-100 sugar units, preferably 10-50 sugar units and most preferably 10-25 sugar units.

33. The polymer product according to any of claims 31-32, **characterized in that** said polymer product further comprises at least a second polysaccharide different from said oligo-and polysaccharides.

34. The polymer product according to claim 33, **characterized in that** the ratio between said oligo-and polysaccharides and said at least a second polysaccharide is between 1:10 and 10:1, preferably between 1:5 and 5:1 and most preferably between 1:2 and 2:1.

35. The polymer product according to any of claims 31-34, **characterized in that** said polymer product also comprises a plasticizer.

36. The polymer product comprising according to any of claims 31-35, wherein said polymer product is a film.

37. The polymer product according to any of claims 31-35, **characterized in that** said polymer product is a coating.

38. The polymer product according to any of claims 31-35, **characterized in that** said polymer product is a gel.

39. The polymer product according to any of claims 36-37, **characterized in that** said polymer product is substantially gas impermeable.

40. The polymer product according to claim 39, **characterized in that** said polymer product is substantially oxygen impermeable.

41. The polymer product according to claim 40, **characterized in that** said polymer product has an oxygen gas transmission rate of less than 100 cm$^3$ / m$^2$ 24h, preferably less than 10 cm$^3$ / m$^2$ 24h and most preferably less than 2 cm$^3$ / m$^2$ 24h.

42. The polymer product according to any of claims 36-41, **characterized in that** said polymer product is used for a protective package for a gas sensitive product.


**Patentansprüche**

1. verfahren zur Verwendung eines Hydrolysats aus einem Holzmaterial, wie Holzspänen, wobei das Verfahren, die folgenden Stufen umfasst:

  - Bereitstellen eines Holzmaterials,
  - Behandlung des Holzmaterials, so dass ein Holzhydrolysat und ein Holzrückstand gebildet wird, wobei sich der Holzückstand zur Pulpeherstellung eignet und das Holzhydrolysat Oligo- und Polysaccharide als Hauptbestandteile der Trockenmasse umfasst,
  - Auftrennen des Holzhydrolysats in mindestens eine erste und eine zweite Fraktion aufgrund von Molekulargewichtsunterschieden, wobei die erste Fraktion ein höheres Molekulargewicht als die zweite Fraktion aufweist, **dadurch gekennzeichnet, dass** die Behandlung des Holzmaterials durch eine hydrothermische Behandlung mit flüssigem Wasser durchgeführt wird und;
  - Verwenden der ersten Fraktion zur Herstellung eines Polymerprodukts.

2. Verfahren nach Anspruch 1, **dadurch gekennzeichnet, dass** der Holzrückstand zur Pulpeherstellung verwendet wird.

**3.** Verfahren nach Anspruch 1, **dadurch gekennzeichnet, dass** die erste Fraktion mindestens 80 % Oligo- und Polysaccharide, 5 bis 15 % Lignin, 0 bis 5 % Monosaccharide und <0,1 % Asche, bezogen auf die Trockenmasse, umfasst.

**4.** Verfahren nach Anspruch 1 oder 3, **dadurch gekennzeichnet, dass** der Grad der Substitution mit Acetylgruppen für die Saccharide in der ersten Fraktion 0,05 bis 2,0, vorzugsweise 0,1 bis 1,5 und insbesondere 0,2 bis 1,0 und ganz besondere 0,5 bis 1,0 beträgt.

**5.** Verfahren nach Anspruch 1, **dadurch gekennzeichnet dass** die erste Fraktion mit mindestens einer zusätzlichen Substanz vermischt wird.

**6.** Verfahren nach Anspruch 5, **dadurch gekennzeichnet, dass** es sich bei der zusätzlichen Substanz um mindestens ein Polysaccharid handelt, wobei das mindestens eine Polysaccharid vorzugsweise in einer zweiten wässrigen Lösung vorliegt, und das Gemisch zur Herstellung des polymerprodukts verwendet wird.

**7.** Verfahren nach Anspruch 5 oder 6, **dadurch gekennzeichnet, dass** die erste Fraktion mit einem Weichmacher in einer dritten wässrigen Lösung vermischt wird und dieses Gemisch zur Herstellung des Polymerprodukts verwendet wird.

**8.** Verfahren nach Anspruch 6 oder 7, **dadurch gekennzeichnet, dass** das Gewichtsverhältnis zwischen der ersten Fraktion und dem Polysaccharid 1:10 bis 10:1, vorzugsweise 1:5 bis 5:1 und insbesondere 1:2 bis 2:1 beträgt.

**9.** Verfahren nach Anspruch 1 oder 5 bis 8, **dadurch gekennzeichnet, dass** das Polymerprodukt durch Entfernung des wässrigen Lösungsmittels aus dem Gemisch hergestellt wird.

**10.** Verfahren nach Anspruch 1 bis 9, **dadurch gekennzeichnet, dass** es sich bei dem aus der ersten Fraktion gebildeten Polymerprodukt um einen Film handelt.

**11.** Verfahren nach Anspruch 1 bis 9, **dadurch gekennzeichnet, dass** es sich bei dem aus der ersten Fraktion gebildeten Polymerprodukt um einen Überzug handelt.

**12.** Verfahren nach Anspruch 1 bis 9, **dadurch gekennzeichnet, dass** es sich bei dem aus der ersten Fraktion gebildeten Polymerprodukt um ein Gel handelt.

**13.** Verfahren nach Anspruch 12, **dadurch gekennzeichnet, dass** zur Bildung des Gels eine Vernetzung herangezogen wird.

**14.** Verfahren nach einem der vorstehenden Ansprüche, **dadurch gekennzeichnet, dass** die zweite Fraktion zur Herstellung eines Monomerprodukts verwendet wird.

**15.** Verfahren nach Anspruch 14, **dadurch gekennzeichnet, dass** eine biochemische oder chemische Umwandlung zur Herstellung des Monomerprodukts herangezogen wird.

**16.** Verfahren nach Anspruch 15, **dadurch gekennzeichnet, dass** es sich bei der biochemischen oder chemischen Umwandlung um eine Fermentation handelt und es sich beim gebildeten Monomerprodukt um Ethanol handelt.

**17.** Verfahren nach Anspruch 16, **dadurch gekennzeichnet, dass** es sich bei der biochemischen oder chemischen Umwandlung um eine Fermentation handelt und es sich beim gebildeten Monomerprodukt um Milchsäure handelt.

**18.** Verfahren nach einem der vorstehenden Ansprüche, **dadurch gekennzeichnet, dass** das Holzmaterial in Form von Holzspänen bereitgestellt wird.

**19.** Verfahren nach einem der vorstehenden Ansprüche, **dadurch gekennzeichnet, dass** es sich beim Holzmaterial um Weichholz handelt.

**20.** Verfahren nach einem der Ansprüche 1 bis 18, **dadurch gekennzeichnet, dass** es sich beim Holzmaterial um Hartholz handelt.

21. Verfahren nach einem der Ansprüche 1 bis 18, **dadurch gekennzeichnet, dass** es sich beim Holzmaterial um eine Kombination aus Weichholz und Hartholz handelt.

22. Verfahren nach einem der vorstehenden Ansprüche, **dadurch gekennzeichnet, dass** die Trennung durch Filtration vorgenommen wird.

23. Verfahren nach Anspruch 22, **dadurch gekennzeichnet, dass** die Trennung mittels einer Ultrafiltrationsvorrichtung, die mindestens eine Membran umfasst, vorgenommen wird.

24. Verfahren nach Anspruch 23, **dadurch gekennzeichnet, dass** die mindestens eine Membran eine Trenngrenze von 1 000 bis 15 000 Da und vorzugsweise von 1 000 bis 5 000 Da aufweist.

25. Verfahren nach einem der Ansprüche 1 bis 21, **dadurch gekennzeichnet, dass** die Trennung durch eine Lösungsmittelfraktionierung vorgenommen wird.

26. Verfahren nach einem der vorstehenden Ansprüche, **dadurch gekennzeichnet, dass** die hydrothermische Behandlung bei einer Temperatur von 100 bis 190 °C, vorzugsweise von 130 bis 180 °C und insbesondere von 150 bis 170 °C durchgeführt wird.

27. Verfahren nach einem der vorstehenden Ansprüche, **dadurch gekennzeichnet, dass** die Zeitspanne für die hydrothermische Behandlung 10 bis 360 Minuten, vorzugsweise 30 bis 180 Minuten und insbesondere 30 bis 120 Minuten beträgt.

28. Verfahren nach einem der vorstehenden Ansprüche, **dadurch gekennzeichnet, dass** das Holzhydrolysat ferner eine geringe Menge an Lignin umfasst.

29. Verfahren nach Anspruch 28, **dadurch gekennzeichnet, dass** die geringe Menge an Lignin weniger als 35 % und vorzugsweise weniger als 25 % der Trockenmasse beträgt.

30. Verfahren nach einem der vorstehenden Ansprüche, **dadurch gekennzeichnet, dass** das Holzhydrolysat ferner einen Anteil an Monosacchariden von etwa 10 bis 25 % der Trockenmasse umfasst.

31. Polymerprodukt, abgeleitet von einer Zusammensetzung, wobei sich die Zusammensetzung durch eine hydrothermische Behandlung eines Holzmaterials mit flüssigem Wasser ergibt, **dadurch gekennzeichnet, dass** das Polymerprodukt mindestens 80 % Oligo- und polysaccharide, 5 bis 15 % Lignin, 0 bis 5 % Monosaccharide und <0,1 % Asche, bezogen auf die Trockenmasse, umfasst und dass die Saccharide einen hohen Substitutionsgrad mit Acetylgruppen ($Ds_{AC}$) aufweisen, wobei der Substitutionsgrad 0,05 bis 2,0 beträgt.

32. Polymerprodukt nach Anspruch 31, **dadurch gekennzeichnet, dass** der Großteil der Oligo- und Polysaccharide 10 bis 100 Zuckereinheiten, vorzugsweise 10 bis 50 Zuckereinheiten und insbesondere 10 bis 25 Zuckereinheiten umfasst.

33. Polymerprodukt nach einem der Ansprüche 31-32, **dadurch gekennzeichnet, dass** das Polymerprodukt ferner mindestens ein zweites Polysaccharid umfasst, das sich von den Oligo- und polysacchariden unterscheidet.

34. Polymerprodukt nach Anspruch 33, **dadurch gekennzeichnet, dass** das Verhältnis zwischen den Oligo- und Polysacchariden und dem mindestens einen zweiten Polysaccharid 1:10 bis 10:1, vorzugsweise 1:5 bis 5:1 und insbesondere 1:2 bis 2:1 beträgt.

35. Polymerprodukt nach einem der Ansprüche 31-34, **dadurch gekennzeichnet, dass** das Polymerprodukt ferner einen Weichmacher umfasst.

36. Polymerprodukt nach einem der Ansprüche 31-35, **dadurch gekennzeichnet, dass** es sich beim Polymerprodukt um einen Film handelt.

37. Polymerprodukt nach einem der Ansprüche 31-35, **dadurch gekennzeichnet, dass** es sich beim Polymerprodukt um einen Überzug handelt.

**38.** Polymerprodukt nach einem der Ansprüche 31-35, **dadurch gekennzeichnet, dass** es sich beim Polymerprodukt um ein Gel handelt.

**39.** Polymerprodukt nach einem der Ansprüche 36-37, **dadurch gekennzeichnet, dass** das Polymerprodukt im Wesentlichen gasundurchlässig ist.

**40.** Polymerprodukt nach Anspruch 39, **dadurch gekennzeichnet, dass** das Polymerprodukt im Wesentlichen sauerstoffundurchlässig ist.

**41.** Polymerprodukt nach Anspruch 40, **dadurch gekennzeichnet, dass** das Polymerprodukt eine Sauerstoffgas-Durchlassgeschwindigkeit von weniger als 100 cm$^3$/m$^2$ 24 h, vorzugsweise von weniger als 10 cm$^3$/m$^2$ 24 h und insbesondere von weniger als 2 cm$^3$/m$^2$ 24 h aufweist.

**42.** Polymerprodukt nach einem der Ansprüche 36 bis 41, **dadurch gekennzeichnet, dass** das Polymerprodukt für eine Schutzverpackung für ein gasempfindliches Produkt verwendet wird.

## Revendications

**1.** Procédé d'utilisation d'un hydrolysat à partir d'un matériau de bois, tel que des copeaux de bois, ledit procédé comprenant les étapes consistant à

- fournir un matériau de bois,
- traiter ledit matériau de bois de sorte qu'un hydrolysat de bois et un résidu de bois sont formés, ledit résidu de bois étant approprié pour la production de pâte, ledit hydrolysat de bois comprenant des oligo- et poly-saccharides en tant que composant principal de matière sèche,
- séparer ledit hydrolysat de bois en au moins une première et une seconde fraction au moyen d'une différence de masse moléculaire, dans lequel ladite première fraction a une masse moléculaire supérieure à ladite seconde fraction,
**caractérisé en ce que**
ledit traitement dudit matériau de bois est effectué au moyen d'un traitement hydrothermique avec de l'eau sous forme liquide et ;
- utiliser ladite première fraction pour produire un produit polymère.

**2.** Procédé selon la revendication 1, **caractérisé en ce que** ledit résidu de bois est utilisé pour la production de pâte.

**3.** Procédé selon la revendication 1, **caractérisé en ce que** ladite première fraction comprend au moins 80 % d'oligo- et poly-saccharides, 5 à 15 % de lignine, 0 à 5 % de monosaccharides et < 0, 1 % de cendres, par rapport à la matière sèche.

**4.** Procédé selon la revendication 1 ou 3, **caractérisé en ce que** le degré de substitution des saccharides par des groupes acétyle dans ladite première fraction est compris entre 0,05 et 2,0, de préférence entre 0,1 et 1,5 et de manière encore davantage préférée entre 0,2 et 1,0, de manière préférée entre toutes entre 0,5 et 1,0.

**5.** Procédé selon la revendication 1, **caractérisé en ce que** ladite première fraction est mélangée avec au moins une substance supplémentaire.

**6.** Procédé selon la revendication 5, **caractérisé en ce que** ladite substance supplémentaire est au moins un polysaccharide, ledit au moins un polysaccharide étant de préférence dans une deuxième solution aqueuse, et **en ce que** ledit mélange est utilisé pour produire ledit produit polymère.

**7.** Procédé selon les revendications 5 ou 6, **caractérisé en ce que** ladite première fraction est mélangée avec un plastifiant dans une troisième solution aqueuse et **en ce que** ledit mélange est utilisé pour produire ledit produit polymère.

**8.** Procédé selon les revendications 6 ou 7, **caractérisé en ce que** le rapport en poids entre ladite première fraction et ledit polysaccharide va de 1:10 à 10:1, de préférence de 1:5 à 5:1 et de manière préférée entre toutes est compris entre 1:2 et 2:1.

9. Procédé selon l'une quelconque des revendications 1 ou 5 à 8, **caractérisé en ce que** ledit produit polymère est produit par élimination dudit solvant aqueux dudit mélange.

10. Procédé selon l'une quelconque des revendications 1 à 9, **caractérisé en ce que** ledit produit polymère produit à partir de ladite première fraction est un film.

11. Procédé selon l'une quelconque des revendications 1 à 9, **caractérisé en ce que** ledit produit polymère produit à partir de ladite première fraction est un revêtement.

12. Procédé selon l'une quelconque des revendications 1 à 9, **caractérisé en ce que** ledit produit polymère produit à partir de ladite première fraction est un gel.

13. Procédé selon la revendication 12, **caractérisé en ce qu'**une réticulation est utilisée pour former ledit gel.

14. Procédé selon l'une quelconque des revendications précédentes, **caractérisé en ce que** ladite seconde fraction est utilisée pour fabriquer un produit monomère.

15. Procédé selon la revendication 14, **caractérisé en ce qu'**une conversion biochimique ou chimique est utilisée pour produire ledit produit monomère.

16. Procédé selon la revendication 15, **caractérisé en ce que** ladite conversion biochimique ou chimique est la fermentation et **en ce que** ledit produit monomètre produit est l'éthanol.

17. Procédé selon la revendication 16, **caractérisé en ce que** ladite conversion biochimique ou chimique est la fermentation et **en ce que** ledit produit monomère produit est l'acide lactique.

18. Procédé selon l'une quelconque des revendications précédentes, **caractérisé en ce que** le matériau de bois est fourni sous la forme de copeaux de bois.

19. Procédé selon l'une quelconque des revendications précédentes, **caractérisé en ce que** le matériau de bois est un bois tendre.

20. Procédé selon l'une quelconque des revendications 1 à 18, **caractérisé en ce que** le matériau de bois est un bois dur.

21. Procédé selon l'une quelconque des revendications 1 à 18, **caractérisé en ce que** le matériau de bois est une combinaison de bois tendre et de bois dur.

22. Procédé selon l'une quelconque des revendications précédentes, **caractérisé en ce que** ladite séparation est effectuée par filtration.

23. Procédé selon la revendication 22, **caractérisé en ce que** ladite séparation est effectuée au moyen d'un dispositif d'ultrafiltration comprenant au moins une membrane.

24. Procédé selon la revendication 23, **caractérisé en ce que** ladite au moins une membrane a un intervalle limite compris entre 1 000 et 15 000 Da, de préférence entre 1 000 et 5 000 Da.

25. Procédé selon l'une quelconque des revendications 1 à 21, **caractérisé en ce que** ladite séparation est effectuée au moyen d'un fractionnement par solvant.

26. Procédé selon l'une quelconque des revendications précédentes, **caractérisé en ce que** ledit traitement hydrothermique est effectué à une température comprise entre 100°C et 190°C, de préférence entre 130°C et 180°C, et de manière préférée entre toutes entre 150 °C et 170 °C.

27. Procédé selon l'une quelconque des revendications précédentes, **caractérisé en ce que** le temps nécessaire pour ledit traitement hydrothermique va de 10 à 360 minutes, de préférence est compris entre 30 et 180 minutes, et de manière préférée entre toutes entre 30 et 120 minutes.

28. Procédé selon l'une quelconque des revendications précédentes, **caractérisé en ce que** ledit hydrolysat de bois comprend en outre une faible quantité de lignine.

29. Procédé selon la revendication 28, **caractérisé en ce que** ladite faible quantité de lignine est inférieure à 35 %, de préférence inférieure à 25 % de matière sèche.

30. Procédé selon l'une quelconque des revendications précédentes, **caractérisé en ce que** ledit hydrolysat de bois comprend en outre une quantité de monosaccharides d'environ 10 à 25 % de matière sèche.

31. Produit polymère dérivé d'une composition, ladite composition étant dérivée d'un traitement hydrothermique d'un matériau de bois avec de l'eau sous forme liquide, **caractérisé en ce que** ledit produit polymère comprend au moins 80 % d'oligo- et poly-saccharides, 5 à 15 % de lignine, 0 à 5 % de monosaccharides et <0,1 % de cendres, par rapport à la matière sèche, et **en ce que** lesdits saccharides présentent un degré élevé de substitution par des groupes acétyle ($Ds_{AC}$), ledit degré de substitution est compris entre 0,05 et 2,0.

32. Produit polymère selon la revendication 31, **caractérisé en ce qu'**une majeure partie desdits oligo- et poly-saccharides comprend 10 à 100 unités de sucre, de préférence 10 à 50 unités de sucre et de manière préférée entre toutes 10 à 25 unités de sucre.

33. Produit polymère selon l'une quelconque des revendication 31 et 32, **caractérisé en ce que** ledit produit polymère comprend en outre au moins un second polysaccharide different desdits oligo- et poly-saccharides.

34. Produit polymère selon la revendication 33, **caractérisé en ce que** le rapport entre lesdits oligo- et poly-saccharides et ledit au moins un second polysaccharide est compris entre 1:10 et 10:1, de préférence entre 1:5 et 5:1 et de manière préférée entre toutes entre 1:2 et 2:1.

35. Produit polymère selon l'une quelconque des revendications 31 à 34, **caractérisé en ce que** ledit produit polymère comprend également un plastifiant.

36. Produit polymère selon l'une quelconque des revendications 31 à 35, dans lequel ledit produit polymère est un film.

37. Produit polymère selon l'une quelconque des revendications 31 à 35, **caractérisé en ce que** ledit produit polymère est un revêtement.

38. Produit polymère selon l'une quelconque des revendications 31 à 35, **caractérisé en ce que** ledit produit polymère est un gel.

39. Produit polymère selon l'une quelconque des revendications 36 et 37, **caractérisé en ce que** ledit produit polymère est sensiblement imperméable aux gaz.

40. Produit polymère selon la revendication 39, **caractérisé en ce que** ledit produit polymère est sensiblement imperméable à l'oxygène.

41. Produit polymère selon la revendication 40, **caractérisé en ce que** ledit produit polymère a une vitesse de transmission d'oxygène gazeux inférieure à 100 $cm^3/m^2$ par 24 h, de préférence inférieure à 10 $cm^3/m^2$ par 24 h et de manière préférée entre toutes inférieure à 2 $cm^3/m^2$ par 24 h.

42. Produit polymère selon l'une quelconque des revendications 36 à 41, **caractérisé en ce que** ledit produit polymère est utilisé pour un emballage protecteur destiné à un produit sensible aux gaz.

Wood    Liquid
material

↓        ↓

┌─────────────────────┐
│ 10) Hydrothermal    │   Wood
│ treatment           │   residue        Pulping process
│                     │──────────────→
└─────────────────────┘
        │ Process
        │ water
        ↓
┌─────────────────────┐              ┌─────────────────────┐
│ 20) Separation      │  HMW         │ 30) Production of   │
│                     │  hydrolysate │ polymer product –   │
│                     │────────────→ │ films, coatings, gels│
│                     │              │ etc                 │
└─────────────────────┘              └─────────────────────┘
        │ LMW
        │ hydrolysate
        ↓
┌─────────────────────┐   Monomers for
│ 40) Production of   │   materials and
│ monomer product     │   energy
│                     │──────────────→
└─────────────────────┘
        │ Waste
        ↓

┌─────────────────────────┐
│   10) Ex 1; Ex 2        │
│   20) Ex 3; Ex 4        │
│   30) Ex 5; Ex 6; Ex 7  │
│   40) Ex 8; Ex 9        │
└─────────────────────────┘

**EP 2 067 793 B2**

**REFERENCES CITED IN THE DESCRIPTION**

**Patent documents cited in the description**

- WO 0240767 A, Sundberg
- US 5424417 A, Torget
- US 4681935 A, Forss
- US 6172204 B, Sarkanen and Li
- EP 287960 A

**Non-patent literature cited in the description**

- *Macromol. Rapid Commun.,* 2001, vol. 22, 962-967
- **DAHLMAN et al.** *J Chromatogr. A.,* 2000, vol. 891, 157-174